# EUROPEAN PATENT SPECIFICATION

(11) **EP 0 436 973 B1**
(45) Date of publication and mention of the grant of the patent: **13.08.1997**
(21) Application number: 90203135.0
(22) Date of filing: 27.11.1990
(51) Int. Cl.: B01D 45/16, B04C 5/10

(54) **Device for separating liquids and/or solids from a gas stream**
Vorrichtung zur Abscheidung von Flüssigkeiten und/oder Feststoffteilchen aus einem Gasstrom
Appareil pour éliminer des liquides et/ou des solides d'un courant gazeux

(30) Priority: 02.12.1989 NL 8902978
(43) Date of publication of application: 17.07.1991
(73) Proprietor: N.V. NEDERLANDSE GASUNIE, NL-9700 MA Groningen (NL)
(72) Inventor: Oranje, Leendert, NL-9751 PZ Haren (NL)
(74) Representative: Krijgsman, Willem

(56) References cited:
- DE-A- 2 046 642
- GB-A- 1 261 906
- GB-A- 2 035 150
- US-A- 2 686 573
- US-A- 2 917 131
- US-A- 3 822 533

## Description

The invention relates to an apparatus for separating liquids and/or solids from a gas stream, comprising a cylindrical vessel with a virtually vertically set axis provided with:
a top compartment to which the gas stream is supplied;
a middle compartment comprising a number of blades shaped helicoidally around the axis;
a bottom compartment for the separation of the liquid and/or solids and a coaxial gas discharge pipe projecting upwards from the bottom compartment through the middle and top compartments, around which the helicoidal blades are fixed, in which bottom compartment at least one settling plate with a circular outer rim lies in a plane perpendicular to said axxis and under the gas discharge pipe, and at least one vertical baffle extending diametrically from one wall of the vessel to the other and being provided beneath said plate.

Such an apparatus further denoted as a separator is known from the United States patent 3,822,533. Such cylindrical separators are used particularly to separate impurities from gases at high pressures, for example pressures of over 8 bar.

These separators have the drawback that the separated materials are in violent rotation at the bottom of the vessel during operation.

This causes abrasion or erosion of the bottom and the inner wall near the bottom. It also makes it difficult to discharge the separated materials. Moreover, already separated materials are entrained into the gas discharge pipe again. This phenomenon is known as reentrainment. Already separated liquids and/or solids are later blown from the cyclone again. This is particularly the case when liquids or solids contained in the vessel are still in motion.

To remedy the drawback mentioned above the aforementioned United States patent 3,822,533 suggests to fit the separator with a large circular plate, set perpendicularly to the axis of the vessel and under the gas discharge pipe, at a relatively short distance therefrom, and to install further means under this plate for causing the separated materials to settle. For this reason this round plate is also called a settling plate. It has been found that the settling plate is effective, but not sufficiently so to completely suppress the rotation of the gas, and consequently of the separated impurities in the vessel, and thus the erosion phenomenon. To this effect at least one diametrical baffle has been installed under the settling plate to further suppress the rotation of the gas. The height of this baffle in the cylindrical part of the vessel amounts to 1/8 to 1/2 of the diameter of the cylindrical part of the vessel. It has been found that fine moving particles are still entrained into the gas discharge pipe by the upward gas flow. To prevent this reentrainment it is desirable that these particles are also caused to settle.

The aim of the invention is to provide a device as mentioned in the opening paragraph, which is suitable for separating liquids and/or solids from a gas stream, in which device such provisions have been made that there is virtually no movement of fine particles at and near the bottom of the vessel, so that no solids are entrained into the gas discharge pipe.

This is achieved according to the invention in that the overall height of each baffle is at least 1.0 times the internal diameter of the vessel and in that the distance from the bottom edge of said plate to the top edge of each baffle is at least 0.5 times the internal diameter of the vessel.

Preferably, there are two diametrical baffles, set perpendicularly to one another.

Preferably, the top edge of each diametrical baffle is partly free from the inner wall of the vessel. The reason for this is the suppression of turbulences. The effect of the installation of these baffles is that the gas is set at rest at and near the bottom of the vessel and consequently the separated liquids and/or solids are caused to settle. There is virtually no more movement of fine particles, which means that the phenomenon of reentrainment is virtually suppressed.

From US-A-2,686,573 it is known to install at least one diametrical baffle in a separator vessel. This baffle is mounted on a support rod which is freely suspended in brackets across the diameter of the vessel. The separator is intended to replace cyclone separators which contain a complicated system of baffles, vanes and the like.

The total height of each baffle is at least 1.0 times the internal diameter of the vessel.
Preferably, each diametrical baffle is provided with a slot, which extends from the bottom edge of the baffle and is symmetrical with respect to the axis of the vessel. These slots in the baffles serve to facilitate the cleaning of the vessel. The separated liquid and solids constitute a pasty substance, which would be difficult to remove in the case of baffles without slots. The slots in the baffles also prevent caking of the pasty substance, which occurs particularly at the intersections of the baffles. Moreover, there would be no unimpeded upward flow of the purified gas to the gas discharge pipe. The slot in each baffle is preferably rectangular and the height of the slot is at least 0.6 times the internal diameter of the vessel.

The height of the part of the diametrical baffle that extends from one wall of the vessel to the other is at least 0.4 times the internal diameter of the vessel. The size of the slot measured in the direction perpendicular to the axis of the vessel is 0.25 to 0.5 times the internal diameter of the vessel.

The bottom of the vessel is preferably conically shaped with a decreasing diameter in the direction of the discharge pipe for the separated liquids and/or solids. In this way a more steady discharge is obtained of the separated liquids and/or solids caused to settle by the diametrical baffles.

Other details and advantages will become apparent from the following description, in which reference is made to the appended drawings. In these drawings:
Fig. 1 is partially a vertical section of the separator and also a detail thereof;
Fig. 2 is a cross-section of the separator along the line a-a;
Fig. 3 is a cross-section of the separator along the line b-b, and
Fig. 4 is a cross-section of the vessel at detail b in Fig. 1.

The gas to be purified is fed to the top compartment 1 of the separator via inlet 3. A rotary motion is imparted to the gas by the blades 5 in the middle compartment 4, for the purpose of converting the flow energy of the gas into a centrifugal force, required for the separation. The separated liquid and/or solids collect against the inner wall of the bottom compartment 6 of the vessel 2 and then move downward and are caused to settle by the plate 7. The separated material is discharged via the conical bottom 8 and the pipe 9.

The purified gas is discharged via the gas discharge pipe 10, which is mounted coaxially with the vessel 2 and projects upwards from the bottom compartment 6, through the middle compartment 4 and the top compartment 1.
The helicoidal blades 5 are attached to the gas discharge pipe 10 at some distance from one another and partially overlap one another, thus creating the desired curved channel. Each helicoidal blade 5 is composed of a bottom section with a constant pitch and a section with a pitch that gradually increases in upward direction. This causes a gradual acceleration of the gas fed into the separator, which results in a smaller pressure drop when the gas is caused to rotate. Between the blades 5 are vertical baffles 11, which, viewed in the flow direction of the gas, extend from the gas discharge tube 10 in the direction of the inner wall of the vessel 2. These baffles 11 are shaped like flat planes. These baffles improve the liquid separating capacity. This is improved even more when the free ends of the baffles are sharp.

To further improve the separation of the liquids from the gas, conical sleeve sections 12 and 13 are fixed to the outer wall of the gas discharge pipe 10 in the bottom compartment (6) of the vessel 2. These sleeve sections serve as so-called anti-film skirts, that is, liquid adhering to the outer wall of the gas discharge pipe 10 is guided along these conical sleeve sections in the direction of the wall of the vessel 2.

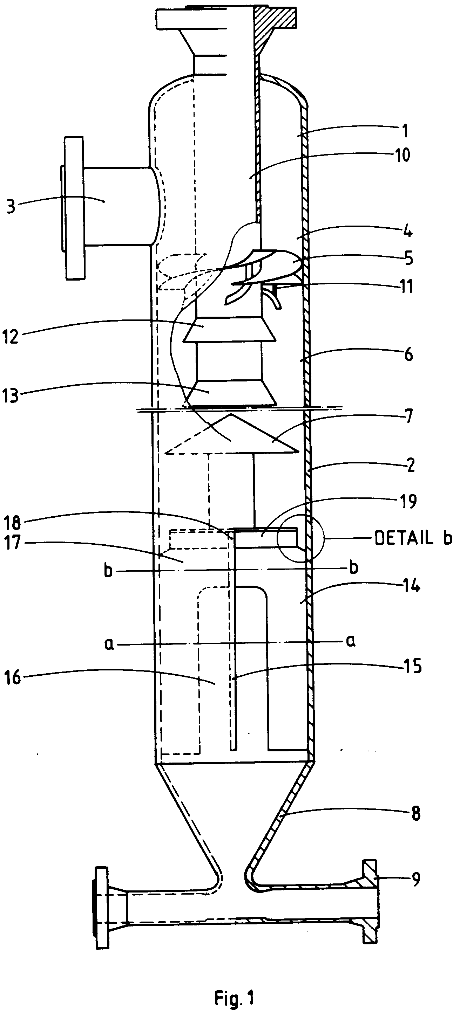

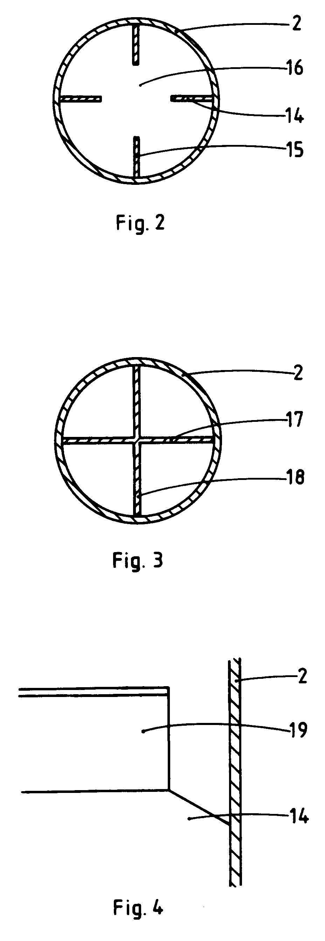

The aim of the settling plate 7, which is here shaped like a conical plate, is to cause the liquids and/or solids separated from the gas to settle. In the absence thereof, the separated liquids and/or solids would be in violent rotation at the bottom of the vessel. This would cause erosion of the bottom and the inner wall near the bottom. It has been found that the plate 7 is effective, but insufficiently so to completely suppress the rotation of the gas in the vessel, and thus the erosion. To this effect, diametrical baffles 14 and 15 are installed perpendicularly to one another under plate 7. The effect of these baffles is that the gas and, consequently, the separated liquids and/or solids are set at rest at and near the bottom 8 of the vessel 2. The overall height of each of the baffles 14 and 15 is at least 1.0 times the internal diameter of the vessel 2. As Figures 1 and 2 show, each baffle 14 and 15 has a slot 16, which extends from the bottom edge of the baffle and is symmetrical with respect to the axis of the vessel. The aim of these slots 16 in baffles 14 and 15 is to facilitate the discharge of the pasty substance formed by the separated liquids and solids and to avoid caking hereof. Such caking occurs with baffles without slots, particularly at the intersection of the baffles. Moreover, the upward flow of the purified gas to the gas discharge pipe 10 is impeded less.

The slot 16 in each of the baffles 14 and 15 is rectangular and the height of the slot is at least 0.6 times the diameter of the vessel 2.

The height of the parts 17 and 18 of the diametrical baffles 14 and 15 which extend from one of the walls of the vessel to the other wall is at least 0.4 times the internal diameter of the vessel 2. The size of the slot 16 in the direction perpendicular to the axis of the vessel is 0.25 to 0.5 times the internal diameter of the vessel 2.

The distance from the bottom edge of the settling plate 7 to the top edge of the vertical baffles 14 and 15 is at least 0.5 times the internal diameter of the vessel.

As Figures 1 and 4 show, the top edge 19 of each of the baffles 14 and 15 is partially free from the inner wall of the vessel 2. This has been done to suppress turbulences. The bottom 8 of the vessel 2 is conically shaped. This results in a more steady discharge of the separated settled liquids and/or solids.

With the device according to the invention the fine particles are also caused to settle and are thus virtually not entrained into the gas discharge pipe.

## Claims

1. Device for the separation of liquids and/or solids from a gas stream, comprising a cylindrical vessel (2) with a virtually vertically set axis, provided with: a top compartment (1) to which the gas stream is supplied; a middle compartment (4) comprising a number of blades (5) shaped helicoidally around the axis; a bottom compartment for the separation of the liquid and/or solids and a coaxial gas discharge pipe (10) projecting upwards from the bottom compartment (6) through the middle (4) and top (1) compartments, around which the helicoidal blades (5) are fixed, in which bottom compartment (6) at least one settling plate (7) with a circular outer rim lies in a plane perpendicular to said axis and under the gas discharge pipe (1), and at least one vertical baffle (14, 15) extending diametrically from one wall of the vessel to the other and being provided beneath said plate (7), characterized in that the overall height of each baffle (14, 15) is at least 1.0 times the internal diameter of the vessel (2) and in that the distance from the bottom edge of said plate (7) to the top edge (19) of each baffle (14, 15) is at least 0.5 times the internal diameter of the vessel (2).

2. Device according to claim 1, characterized in that it is provided with two perpendicular diametrical baffles (14, 15).

3. Device according to either one of claims 1 or 2, characterized in that each diametrical baffle (14, 15) is provided with a slot (16) that extends from the bottom edge of the baffle and is symmetrical with respect to the axis of the vessel.

4. Device according to claim 3, characterized in that the slot (16) is rectangular.

5. Device according to claim 3 or 4, characterized in that the height of the slot 16) is at least 0.6 times the internal diameter of the vessel (2).

6. Device according to any one of claims 3-5, characterized in that the height of the part (17,18) of the diametrical baffle (14,15) that extends from one wall of the vessel to the other is at least 0.4 times the internal diameter of the vessel.

7. Device according to any one of claims 3-6, characterized in that the size of the slot (16) in the direction perpendicular to the axis of the vessel is 0.25 to 0.5 times the internal diameter of the vessel.

8. Device according to any one of claims 1-7, characterized in that the top edge of each diametrical baffle is partially free from the inner wall of the vessel.

9. Device according to any one of claims 1-8, characterized in that the bottom of the vessel is conically shaped with a decreasing diameter in the direction of the discharge pipe for the separated liquids and/or solids.

## Patentansprüche

1. Vorrichtung zur Abscheidung von Flüssigkeiten und/oder Feststoffen aus einem Gasstrom, die ein zylindrisches Gefäß (2) mit einer praktisch vertikal festgelegten Achse aufweist, welches versehen ist mit:
einem oberen Abteil (1), welchem der Gasstrom zugeführt wird; einem mittleren Abteil (4), das eine Anzahl von schraubenlinienförmig um die Achse geformten Flügeln (5) aufweist;
einem unteren Abteil zur Abscheidung der Flüssigkeit und/oder der Feststoffe und einem koaxialen Gasableitungsrohr (10), welches vom unteren Abteil (6) durch das mittlere (4) und obere Abteil (1) hindurch nach oben ragt, und um das herum die schraubenlinienförmigen Flügel (5) befestigt sind, in welchem unteren Abteil (6) mindestens eine Absetzplatte (7) mit einem kreisförmigen Außenrand in einer Ebene senkrecht zu dieser Achse und unter dem Gasableitungsrohr (10) liegt, und wobei sich mindestens eine vertikale Leitwand (14, 15) diametral von einer Wand des Gefäßes zur anderen erstreckt und unterhalb dieser Platte (7) vorgesehen ist,
dadurch gekennzeichnet, daß die Gesamthöhe jeder Leitwand (14, 15) mindestens das 1,0-fache des Innendurchmessers des Gefäßes (2) beträgt und daß der Abstand vom unteren Rand der Platte (7) zum oberen Rand (19) jeder Leitwand (14, 15) mindestens das 0,5-fache des Innendurchmessers des Gefäßes (2) beträgt.

2. Vorrichtung nach Anspruch 1, dadurch gekennzeichnet, daß sie mit zwei senkrechten, diametralen Leitwänden (14, 15) versehen ist.

3. Vorrichtung nach Anspruch 1 oder 2, dadurch gekennzeichnet, daß jede diametrale Leitwand (14, 15) mit einem Schlitz (16) versehen ist, der vom unteren Rand der Leitwand weg verläuft und in bezug auf die Gefäßachse symmetrisch ist.

4. Vorrichtung nach Anspruch 3, dadurch gekennzeichnet, daß der Schlitz (16) rechteckig ist.

5. Vorrichtung nach Anspruch 3 oder 4, dadurch gekennzeichnet, daß die Höhe des Schlitzes (16) mindestens das 0,6-fache des Innendurchmessers des Gefäßes (2) beträgt.

6. Vorrichtung nach einem der Ansprüche 3 bis 5, dadurch gekennzeichnet, daß die Höhe des Teils (17, 18) der diametralen Leitwand (14, 15), die von einer Wand des Gefäßes zur anderen verläuft, mindestens das 0,4-fache des Innendurchmessers des Gefäßes beträgt.

7. Vorrichtung nach einem der Ansprüche 3 bis 6, dadurch gekennzeichnet, daß die Größe des Schlitzes (16) in Richtung senkrecht zur Gefäßachse das 0,25- bis 0,5-fache des Innendurchmessers des Gefäßes beträgt.

8. Vorrichtung nach einem der Ansprüche 1 bis 7, dadurch gekennzeichnet, daß der obere Rand jeder diametralen Leitwand teilweise frei von der Innenwand des Gefäßes verläuft.

9. Vorrichtung nach einem der Ansprüche 1 bis 8, dadurch gekennzeichnet, daß der Boden des Gefäßes konisch geformt ist, wobei der Durchmesser in Richtung des Ableitungsrohres für die abgeschiedenen Flüssigkeiten und/oder Feststoffe abnimmt.

## Revendications

1. Appareil pour l'élimination des liquides et/ou des solides d'un courant gazeux, comprenant un récipient cylindrique (2) avec un axe placé virtuellement verticalement, prévu avec : un compartiment supérieur (1) auquel le gaz est amené ; un compartiment médian (4) comprenant un certain nombre de lames (5) formées en hélice autour de l'axe; un compartiment inférieur (6) pour la séparation des liquides et/ou des solides et un tube d'évacuation de gaz coaxial (10) faisant saillie vers le haut depuis le compartiment inférieur (6), à travers les compartiments médian (4) et supérieur (1), autour duquel les lames hélicoïdales (5) sont fixées, dans lequel compartiment inférieur (6) au moins un plateau de décantation (7) avec un rebord extérieur circulaire, s'étend dans un plan perpendiculaire audit axe et sous le tube d'évacuation de gaz (10), et au moins un déflecteur vertical (14, 15) s'étendant diamétralement d'une paroi du récipient vers l'autre et situé sous ledit plateau (7),
caractérisé en ce que la hauteur hors-tout de chaque déflecteur (14, 15) est, au moins, 1 fois le diamètre intérieur du récipient (2) et en ce que la distance du bord inférieur dudit plateau (7) au bord supérieur (19) de chaque déflecteur (14, 15) est, au moins, 0,5 fois le diamètre intérieur du récipient (2).

2. Appareil selon la revendication 1, caractérisé en ce qu'il est prévu avec deux déflecteurs diamétraux perpendiculaires (14, 15).

3. Appareil selon l'une ou l'autre des revendications 1 ou 2, caractérisé en ce que chaque déflecteur diamétral (14, 15) est prévu avec une fente (16) qui s'étend depuis le bord inférieur du déflecteur et est symétrique par rapport à l'axe du récipient.

4. Appareil selon la revendication 3, caractérisé en ce que la fente (16) est rectangulaire.

5. Appareil selon la revendication 3 ou la revendication 4, caractérisé en ce que la hauteur de la fente (16) est, au moins, 0,6 fois le diamètre intérieur du récipient (2).

6. Appareil selon l'une quelconque des revendications 3 à 5, caractérisé en ce que la hauteur de la partie (17, 18) du déflecteur diamétral (14, 15) qui s'étend d'une paroi du récipient à l'autre, est, au moins, 0,4 fois le diamètre intérieur du récipient.

7. Appareil selon l'une quelconque des revendications 3 à 6, caractérisé en ce que la dimension de la fente (16) dans la direction perpendiculaire à l'axe du récipient est 0,25 à 0,5 fois le diamètre intérieur du récipient.

8. Appareil selon l'une quelconque des revendications 1 à 7, caractérisé en ce que le bord supérieur de chaque déflecteur diamétral est partiellement libre de la paroi intérieure du récipient.

9. Appareil selon l'une quelconque des revendications 1 à 8, caractérisé en ce que le fond du récipient est de forme conique avec un diamètre décroissant en direction du tube d'évacuation pour les liquides et/ou les solides éliminés.
